# EUROPEAN PATENT APPLICATION

(11) **EP 2 950 243 A1**
(43) Date of publication of application: **02.12.2015**
(21) Application number: 14290157.8
(22) Date of filing: 30.05.2014
(51) Int. Cl.: G06Q 10/02, G06Q 50/00, G06Q 50/10, G06Q 50/30

(54) **Seat assignment**

(71) Applicant: Amadeus S.A.S., 06410 Biot (FR)
(72) Inventor: Boulanger, Denis, 06130 Grasse (FR); Choubert, Luc, 06410 Blot (FR); Saban, Raphael, 06600 Antibes (FR); Chan Noon Chung, Mathieu, 1003 Lausanne (CH)
(74) Representative: Samson & Partner Patentanwälte mbB

(57) **Abstract**

A method carried out by means of a computer of assigning seats to passengers of a passenger-transport vehicle, wherein given social relations between passengers are used in the seat assignment. Passengers have a social network relation with at least one of the other passengers and the social network relations of said passengers corresponding to a graph with vertices and edges. The graph is subdivided into groups of vertices, wherein the subdivision encompasses vertices in each group of vertices that are connected to each other vertex in said group of vertices and have fewer than a given maximum number of connections to other vertices in the graph. If a vertex is included in any group of vertices as a result of the subdivision, it is added to a group connected to said vertex via at least one edge.

## Description

### FIELD OF THE INVENTION

The invention relates to seat assignment for passengers of passenger-transport vehicles, a computer system programmed to carry out a seat assignment method, and a corresponding computer program.

### BACKGROUND

Typically, passengers that travel together also buy their tickets together and may choose the option for a group reservation. Having made a group reservation, they are connected by a reservation link that normally assures they are seated next to each other.

### SUMMARY OF THE INVENTION

According to a first aspect a method of assigning seats to passengers of a passenger-transport vehicle is provided, wherein given social relations between passengers are used in the seat assignment. The passengers who have a social network relation with at least one of the other passengers and the social network relations of said passengers correspond to at least one graph with vertices and edges, wherein the passengers correspond to vertices of the graph and the social-network relations correspond to edges of the graph. The method is carried out by means of a computer and comprises:
- subdividing the graph into groups of vertices, wherein the subdividing encompasses vertices within each group of vertices that are connected to each other vertex in said group of vertices and have fewer than a given maximum number of connections to other vertices in the graph, wherein in the subdividing said groups of vertices are selected by minimizing cuts of edges between said vertices in the graph;
- in response to at least one vertex not being included in any group of vertices as a result of the subdividing, adding said at least one non-included vertex into a group connected to said at least one non-included vertex via at least one edge, thereby increasing the size of the group obtained from the subdividing.

According to a further aspect a computer system is provided programmed to assign seats to passengers of a passenger-transport vehicle, wherein given social relations between passengers are used in the seat assignment. The passengers who have a social network relation with at least one of the other passengers and the social network relations of said passengers correspond to at least one graph with vertices and edges, wherein the passengers correspond to vertices of the graph and the social-network relations correspond to edges of the graph. The computer system is programmed to:
- subdivide the graph into groups of vertices, wherein the subdividing encompasses vertices within each group of vertices that are connected to each other vertex in said group of vertices and have fewer than a given maximum number of connections to other vertices in the graph, wherein in the subdividing said groups of vertices are selected by minimizing the cuts of edges between said vertices in the graph;
- in response to at least one vertex not being included in any group of vertices as a result of the subdividing, add said at least one not-included vertex into a group connected to said at least one not-included vertex via at least one edge, thereby increasing the size of the group as obtained from the subdividing.

According to another aspect, a computer program is provided for assigning seats to passengers of a passenger-transport vehicle, wherein given social relations between passengers are used in the seat assignment. The passengers who have a social network relation with at least one of the other passengers and the social network relations of said passengers correspond to at least one graph with vertices and edges, wherein the passengers correspond to vertices of the graph and the social-network relations correspond to edges of the graph. The computer program causes a computer to:
- subdivide the graph into groups of vertices, wherein the subdividing encompasses vertices within each group of vertices that are connected to each other vertex in said group of vertices and have fewer than a given maximum number of connections to other vertices in the graph, wherein in the subdividing said groups of vertices are selected by minimizing cuts of edges between said vertices in the graph;
- in response to at least one vertex not being included in any group of vertices as a result of the subdividing, add said at least one not-included vertex into a group connected to said at least one not-included vertex via at least one edge, thereby increasing the size of the group as obtained from the subdividing.

Other features are inherent in the methods and products disclosed or will become apparent to those skilled in the art from the following description of examples and its accompanying drawings.

### BRIEF DESCRIPTION OF THE DRAWINGS

Examples of the present invention are now explained, also with reference to the accompanying drawings, wherein:
- Fig. 1: is an exemplary graph G1, corresponding to a network of relations between passengers;
- Fig. 2: shows the graph G1 wherein passengers with a high total number of relations, i.e. the popular passengers, are marked by white-centered circles;
- Fig. 3: shows the graph G1 in which groups that contain only passengers who are related to each other are marked by black edgings;
- Fig. 4: illustrates merging procedures, marked by arrows M₁ and M₂, handling non-popular, non-included passengers of graph G1;
- Fig. 5: illustrates merging process M₃ and group creation for popular passengers in the graph G1;
- Fig. 6: is an exemplary graph G2 corresponding to a network of relations between passengers;
- Fig. 7: shows the graph G2 with groups that contain only passengers who are related to each other, marked by black edgings;
- Fig. 8: illustrates merging procedures, marked by arrows M₄ and M₅, handling the first two non-included passengers P₆ and P₇ of graph G2;
- Fig. 9: illustrates alternative merging procedures, marked by arrows M₆ and M₇, handling the first two non-included passengers P₆ and P₇ of graph G2;
- Fig. 10: illustrates merging procedures, marked by arrows M₈ and M₉, handling the next two non-included passengers P₅ and P₁₀ of graph G2, following the merging procedure illustrated by Fig. 8;
- Fig. 11: illustrates merging procedures, marked by arrows M₈ and M₉, handling the next two non-included passengers P₅ and P₁₀ of graph G2, following the merging procedure illustrated by Fig. 9;
- Fig. 12: shows a flow chart of an exemplary group split process;
- Fig. 13: illustrates exemplary building blocks of link-seat-configurations;
- Fig. 14: shows an exemplary arrangement of partially occupied seating space of a vehicle, separated by an aisle A1, illustrating this arrangement before and after seats are assigned to a group of five passengers;
- Fig. 15: shows an exemplary arrangement of partially occupied seating space of a vehicle, separated by an aisle A2, illustrating this arrangement before and after seats are assigned to a group of seven passengers;
- Fig. 16: shows an exemplary computer system arranged to carry out the methodologies described herein.

The drawings and the description of the drawings are of examples of the invention and are not of the invention itself.

### DESCRIPTION OF EXAMPLARY EMBODIMENTS

Prior to a detailed description of exemplary figures, some more general exemplary items will be described.

Seat assignment is the act of assigning seats of a vehicle to a group of passengers in which an individual, unoccupied seat is assigned to each passenger. This seat assignment may be performed for various passenger-transport vehicles, such as airplanes, railways, ships and/or buses. In the seat assignment procedure described herein social network relations of passengers to other passengers are taken into account. These social network relations between the passengers may include relationships on online communication platforms, such as online platforms relating to career, information or entertainment issues.

The allocation of seats to passengers can be represented by a logic representation of passengers and social network relations between them in the form of at least one graph with vertices and edges. The method described herein may be applied to each of the disjoint graphs, separately. Each of those disjoint graphs comprises only vertices that are connected to at least one other vertex of that graph. In a graph the passengers are represented by the vertices of the graph, and the social relations between the passengers are represented by the edges of the graph. The subdivision of the graph into groups of vertices, i.e. groups of passengers, is performed in such a way that a group contains only vertices, which are connected via edges, i.e. relations, to each other vertex in that group. Additionally, only vertices which have fewer than a given maximum number of connections to other vertices of the graph are included in a group.

Vertices that possess at least the maximum number of connections to other vertices, i.e. passengers, may be referred to as popular passengers. The maximum number of relations to other passengers, defining a popular passenger, may be dependent on various parameters, such as the total number of vertices in the graph or on the highest number of connections a single vertex has to other vertices in the graph. In turn, all passengers having a number of connections equal to or fewer than the maximum number of connections that defines a popular passenger may be referred to as non-popular passengers. To avoid the breaking of a large number of relations due to the subdivision of the graph, the lower limit of connections of a vertex that defines a popular passenger might be set to five, for example.

The groups of vertices, i.e. groups of passengers, are chosen in such a way that the number of broken connections resulting from the subdividing, is minimized. This minimizing may, for example, be done by calculating the number of broken relations for each conceivable subdivision of the graph, respecting all given constraints mentioned below, and choosing the subdivision that causes the fewest broken relationships. Following the subdivision, vertices which have not yet been included into a group, are added to groups in order to include every vertex into any one of the groups it has a connection to.

In general a group has a connection to a vertex and vice versa if at least one vertex within the group has a connection to this non-included vertex. The same correlation applies to connected vertices within different groups. Therefore, a group is connected to another group when at least one connection between two vertices, one in each group, exists. In this context breaking a relation means cutting an edge in the graph corresponding to that relation. After seat assignment, those broken relations may result in (former) related passengers being seated spatially apart from each other. However, in the course of the activities indicated in the method claims, cut edges of the graph, i.e. the broken relations, are still available for further evaluation. Thus, the passengers are still correlated even though some of their relations may have been broken during the subdivision of the graph.

If a person skilled in the art were confronted with the above-described problem of assigning seats to passengers while respecting the social relations between them, he or she would conventionally choose an algorithm that compares the relations between all passengers to be seated in all possible combinations in order to sort out passengers who are related to each other and then assigns seats to those passengers. Such an algorithm would have a complexity proportional to n² (i.e. would be of the order O(n²)), wherein n is the number of passengers in a group to be seated. However, the present method of assigning seats does not use such an all-possible-combination approach to seat allocation. It rather proactively selects groups of passengers that have a small group size compared to the entirety of passengers to be seated, which is represented by the graph of vertices. When assigning seats to those groups the relations between the passengers no longer have to be respected, since passengers having a relation to each other are already grouped together. Thus, the present method with its sequential seat assignment to those groups has a complexity related to n (i.e. it is of the order O(n)), wherein n is the total number of passengers to be seated, i.e. the number of vertices in the graph representing the passengers and the relations between them. Hence, the present method requires less processing time, or processing power, than an all-possible-combination approach to seat allocation.

Preferably, in all the embodiments described herein, all the activities indicated in the method claims are carried out automatically by a computer, without human intervention.

In general, many seats of a passenger-transport vehicle, e.g. an airplane, are allocated to passengers who travel in groups formed by a reservation-link resulting from a prior booking, indicating that those passengers belong together. Thus, if they have booked adjacent seats, they will be seated next to each other. In some embodiments passengers with a reservation link are not mapped onto the graph as vertices and therefore the method of seat assignment described herein is not applied to them.

In other embodiments the size of groups formed by the subdivision of the graph as described above is limited to two or three vertices, i.e. passengers, per group. Inherently, due to the condition that the number of cut edges, i.e. the number of broken relations, is minimized, groups consisting of three vertices will be the preferred outcome of the subdivision of the graph. In these groups of two or three vertices, each vertex is connected to each other vertex of the group. Such a group consisting of three vertices, where each vertex is connected to each other vertex of the group is, further referred to as trio.

Depending on the relations between the passengers, it may happen that one of the non-included vertices of the graph may have more connections to a certain group than to any of the other groups formed by the subdivision of the graph. In response to such a graph, the above-mentioned vertex may be added to the group it has the highest number of connections to.

As a result of the subdivision of the graph, in some embodiments groups containing different numbers of vertices may be formed, and some vertices may have not been assigned to a group. In an exemplary graph topology, after the subdivision of the graph, one group may consist of two vertices, another group may consist of three vertices or more and there could still be some non-included vertices. One of these non-included vertices could be connected to a group of three vertices and to a group of two vertices. To resolve such a case, a vertex that has not yet been assigned to a group is added to the group which contains the smallest number of vertices and has at least one connection to that vertex.

In some embodiments the number of connections a non-included vertex has to individual groups formed by the subdivision of the graph differs. This vertex is added to the group to which the vertex has the highest number of connections. Thus, the number of broken connections between vertices, i.e. the relations between passengers, is minimized

In some vehicles the number of seats in a row may be limited, e.g. the number of seats in an airplane seat row is restricted by the size of the fuselage. Hence, in some embodiments the number of vertices per group may have a given upper limit which has to be chosen according to the type and size of the vehicle. Not applying this limit the formation of oversized groups could lead to a split of these groups, as described below, during the seat assignment, since there would not be enough seating space to place the passengers in those groups in a coherent seat configuration.

In order to find the most suitable group assignment for non-included vertices, i.e. the group assignment that breaks the fewest connections between vertices, the total number of connections to other vertices in the graph is taken into account to determine the chronological order, in which the non-included vertices with fewer than the given maximum number of connections to other vertices, i.e. non-popular passengers, are added to groups. The addition of those non-included vertices to groups is sequenced by their number of total connections in the graph, processing the vertex with the highest total number of connections in the graph first. In some embodiments the previously disregarded vertices with more than the given maximum number of connections to other vertices in the graph, i.e. popular passengers, may be considered to determine the chronological order in which the non-included vertices are added to groups and therefore may be chosen first during this adding process.

In some cases, groups formed by the subdivision of the graph, that are connected to non-included vertices may have the same group size, which is smaller than the given maximum group size, i.e. the maximum number of vertices per group. Additionally, still other manifestations of a graph may contain a first non-included vertex with an identical number of connections to at least two groups and at least one other non-included-vertex that is connected to any of those groups. The number of identical connections the first non-included vertex has to those groups is also the highest number of connections this vertex has to any group in the graph. In such a case the total number of connections of a group to the non-included vertices is considered. A group-mark number may be created for each group as a criterion defining which group is the most suitable one for a non-included vertex. The group-mark number can be calculated as follows: total number of connections of a group to all non-included vertices minus the number of connections a group has to popular passengers minus the number of connections a group has to the first non included vertex. The first non-included vertex is added to the group that has the smallest group-mark number with respect to that first non-included vertex. In some embodiments, the previously disregarded vertices with more than the given maximum number of connections to other vertices in the graph, i.e. popular passengers, may be included in the adding process described above.

In other embodiments after the subdivision of the graph and the adding of vertices into groups, there may still be at least two vertices that have not been added to a group one of these vertices may correspond to a previously excluded vertex that has more than a given maximum number of connections to other vertices in the graph, i.e. a popular passenger. In such a case a new group is created that contains those at least two non-included vertices. When forming such a group, the given maximum group size mentioned above may be exceeded.

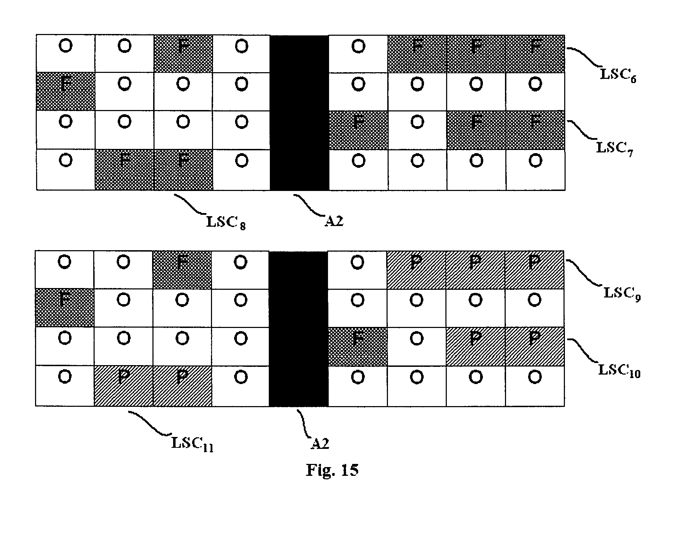

In general, in the seat-assignment process some seats may already be occupied by other passengers and are therefore unavailable. Due to this constraint, it is possible that the size of groups of vertices, i.e. groups of passengers, formed by the subdivision of the graph, exceeds the number of unoccupied seats in the largest link-seat-configuration. A link-seat-configuration might be made up of any combination of unoccupied side by side, face to face, cross aisle, on edge, front to back or slantwise seat conjunctions, as illustrated by Fig. 15. As a consequence, the groups of vertices, i.e. groups of passengers, are split. Splitting a group during a seat assignment stands for dividing that group into not necessarily equal subgroups for the purpose of seat assignment.

In some embodiments the number of vertices in a group might exceed the number of seats in the largest available link-seat-configuration by at least two. In that case each of those unoccupied seats is allocated to a vertex, i.e. a passenger, of the group until all previously unassigned seats in the link-seat-configuration are assigned. All vertices, i.e. the passengers, that have still not been assigned a seat, constitute a new group of vertices, which is referred to as a remainder-group. Provided another unoccupied link-seat-configuration exists with at least the number of seats that equals the number of vertices in the remainder-group, each of those unoccupied seats is allocated to a vertex, i.e. a passenger, of the remainder-group, until all vertices of the remainder-group have been assigned a seat. In the case in which no link-seat-configuration with enough seating space for the remainder-group exists and the number of vertices in the remainder-group exceeds the number of unoccupied seats in any available link-seat-configuration by at least two, the largest unoccupied link-seat-configuration available is chosen. Each of those unoccupied seats is allocated to a vertex, i.e. a passenger, of the remainder-group, until all previously unassigned seats in the largest available unoccupied link-seat-configuration are assigned. All vertices, i.e. the passengers, that have still not been assigned a seat, constitute a new group of vertices, which is referred to as residual-remainder-group. Provided another available link-seat-configuration, exists with at least the number of unoccupied seats that equals the number of vertices in the residual-remainder-group, each of those unoccupied seats is allocated to a vertex, i.e. a passenger, of the residual-remainder-group until all vertices of the residual-remainder-group have been assigned a seat.

The activities mentioned above may be carried out repeatedly by a computer, until a seat of any number of link-seat-configurations has been assigned to each vertex of the group, i.e. each passenger of the group.

In some embodiments the number of vertices in a group, a remainder-group or a residual-remainder-group might exceed the number of unoccupied seats in the largest link-seat-configuration by exactly one. In that case an unoccupied seat of the next smaller available link-seat-configuration is assigned to each vertex, i.e. each passenger, in the group or remainder-group, until each unoccupied seat of the next smaller available link-seat-configuration has been assigned. The vertices which have not been assigned an unoccupied seat of the next-smaller available link-seat-configuration constitute a rest-group of vertices. Thereafter, seats of an available link-seat-configuration that has a number of seats equal to or higher than the number of vertices in that rest-group are assigned to the vertices of that rest-group. A link-seat-configuration large enough to include that rest-group always exists, since the largest link-seat-configuration that contained only one seat fewer than the number of vertices in the group that resulted from the subdividing of the graph, is still available.

In some embodiments all the activities comprised in the method of assigning seats are performed automatically by means of a computer system, e.g. the computer system described herein.

Some embodiments relate to a computer system for producing a seat assignment of a vehicle. The computer system is programmed with a computer program which may be stored on a non-transitory computer-readable storage medium of the computer system, for example a magnetic or optical data disk. The computer program has instructions which, when executed on the computer, cause one or more of the methods described herein to be carried out. For example, the instructions cause the computer to produce a seat assignment of a vehicle, wherein given social network relations between passengers are used in the seat assignment, the passengers having a social network relation with at least one of the other passengers and the social network relations of said passengers corresponding to a graph with vertices and edges, wherein the passengers correspond to the vertices of the graph and the social-network relations correspond to the edges of the graph, the graph covering vertices connected to at least one other vertex in the graph, by:
- subdividing the graph into groups of vertices, wherein the subdividing encompasses vertices in each group of vertices that are connected to each other vertex in said group of vertices and have fewer than a given maximum number of connections to other vertices in the graph, wherein in the subdividing said groups of vertices are selected by minimizing the cuts of edges between said vertices in the graph;
- in response to at least one vertex not being included in any group of vertices as a result of the subdividing, adding said at least one non-included vertex into a group connected to said at least one non-included vertex via at least one edge, thereby increasing the size of the group obtained from the subdividing.

Hence, the description herein relates to a method, a computer system and a computer program for assigning seats of a vehicle, taking into account the relationships between passengers to be seated. By means of a computer a multitude of vehicle passengers is subdivided into groups of related passengers. Thereafter, seats are assigned to said groups of passengers. If there are not enough unoccupied adjacent seats to seat such a group together, a split of said group is performed. This split is performed in such a way that at least two related passengers in said group are seated adjacent to each other.

Other embodiments relate to the computer program itself. In some of these embodiments the computer program is in the form of computer program instructions stored on a non-transitory computer-readable storage medium.

The method of assigning seats defined by the activities indicated in the method claims may not always result in the best conceivable group distribution. For example, a vertex, i.e. a passenger, may be added to a group it has not the most connections to, or more connections than necessary may be broken. In a few seat assignment scenarios depending on the manifestation of the graph, a vertex, i.e. a passenger, might not be added to any group at all and a single, isolated seat may be assigned to the passenger corresponding to that vertex. If a group of passengers is split, when there are too few available link-seat-configurations in the vehicle, the method of splitting groups indicated in the method claims will also assign unoccupied single seats to passengers, disregarding the constraint that no passenger should be assigned a seat separated from other passengers having a relation to him or her, in order to seat all the passengers in the vehicle.

The method of assigning seats of a vehicle and various optional additional aspects of the method is now further described by means of examples which are illustrated by the figures. It is noted that this description and the figures explain general aspects of the invention by way of example only, but are not the invention itself.

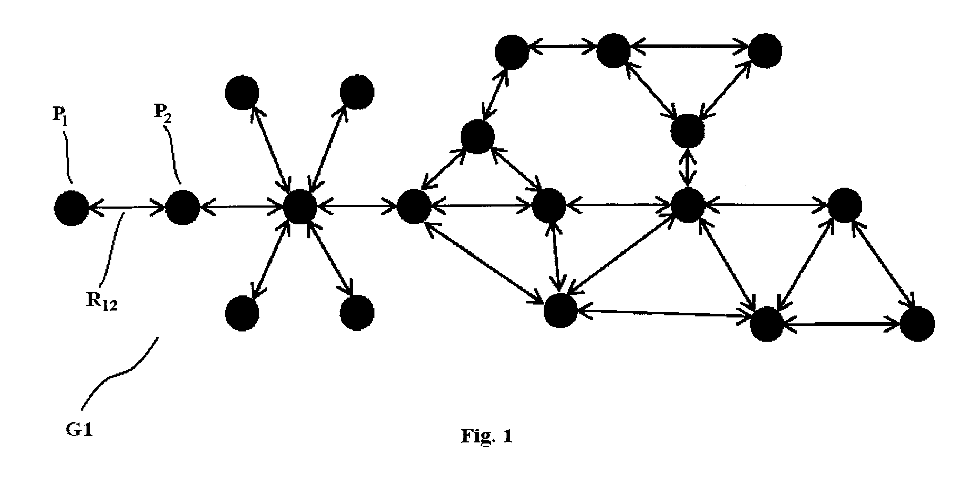

### Exemplary seat assignment to passengers connected via social relations; Fig. 1 to Fig. 5:

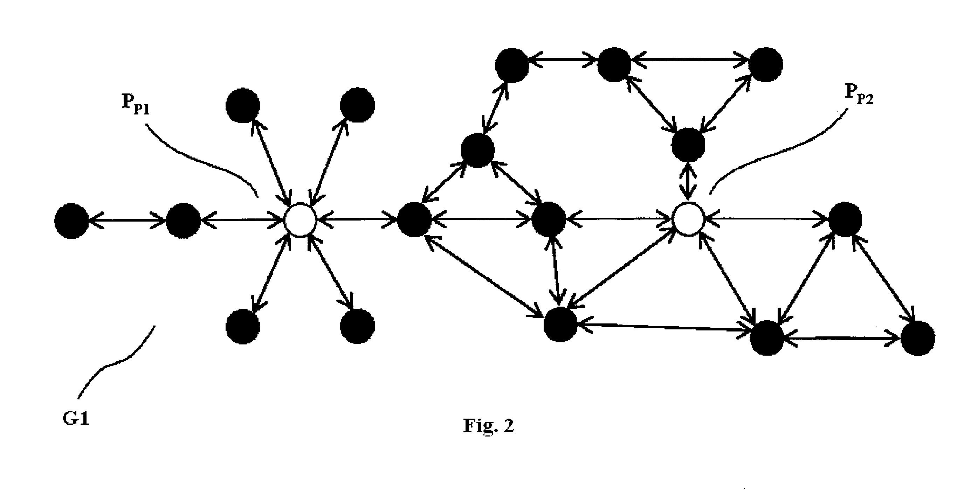

Since a virtually unlimited number of constellations of relations between passengers is conceivable in principle, the following exemplary description is simplified in that it includes fewer than twenty passengers and the arrangement of the relations between the passengers is deliberately chosen in order to show several activities carried out by the claimed method of assigning seats. The method is now further described on the basis of the activities illustrated by the accompanying drawings Fig. 1 to Fig.5. Accordingly, the exemplary Fig. 1 illustrates a manifestation of a graph G1, representing passengers and social relations between the passengers. The graph G1 consists of 19 vertices and 26 edges, corresponding to passengers and relations, respectively. Therein P₁ and P₂ correspond to two different passengers and R₁₂ to a social relation between those passengers. In order to minimize the number of broken relations caused by the subdivision of the graph, popular passengers P_{P1}, P_{P2}, shown as white circles in Fig. 2, are determined. As mentioned above popular passengers have more than a given maximum number of relations to other passengers.

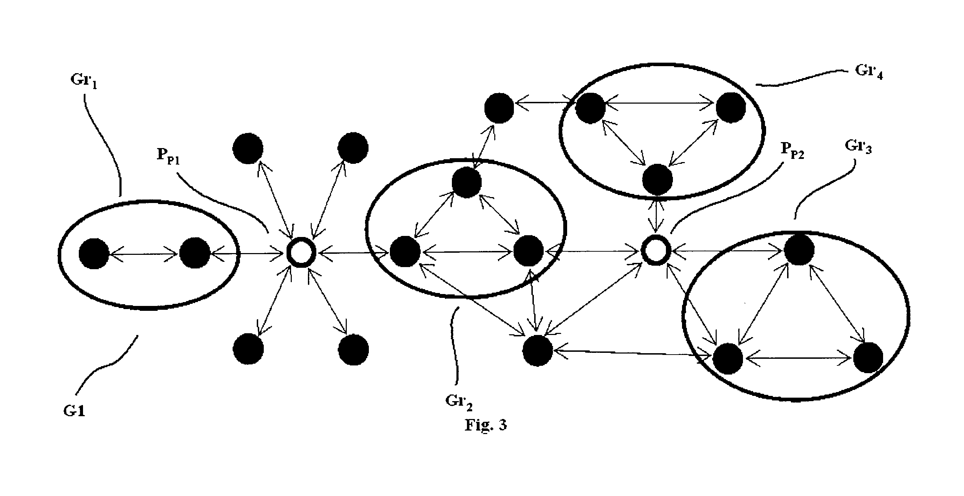

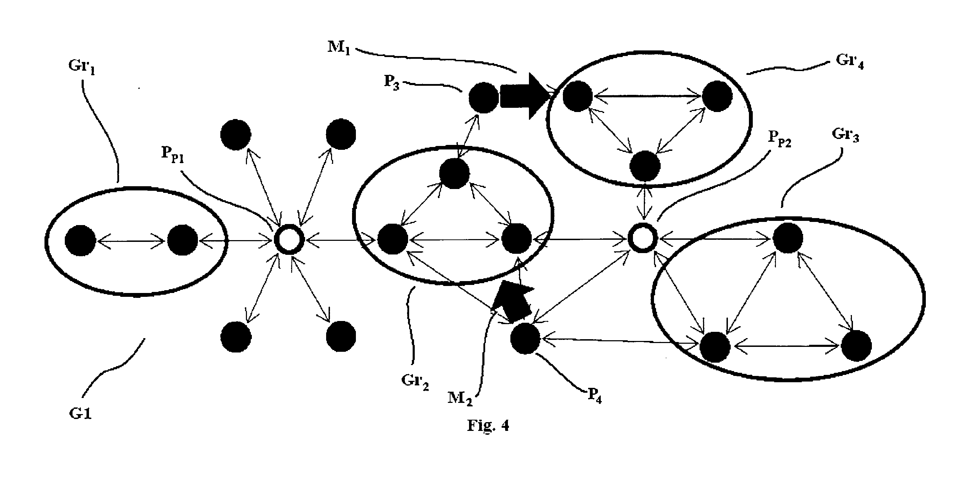

In the embodiment of the method illustrated by Fig. 1 to Fig. 5, which is applied to G1, the maximum number defining a popular passenger is set to four. These popular passengers are disregarded during the subsequent subdivision of graph G1, illustrated by Fig. 3 and 4. Carrying out the activities illustrated by Fig. 3, the graph is subdivided into four groups. Additionally, the maximum group size is set to four passengers in this embodiment. In order to break as few relations as possible, the groups Gr₂, Gr₃ and Gr₄ containing three passengers and another group Gr₁ containing two passengers are chosen. Those groups Gr₁, Gr₂, Gr₃ and Gr₄ only contain passengers, who have relations to each of the other passengers they are grouped with. Following the formation of groups of passengers, i.e. the subdivision of the graph described above, the non-included passengers P₃ and P₄, who are non popular passengers, are added to an appropriate group. Since P₄ has the highest number of relations among the non-included non-popular passengers, P₄ is prioritized for the adding process. Each group P₄ is connected to has an identical group size of three passengers, which is below the maximum group size. Therein P₄ has two relations to Gr₂ and only one relation to Gr₃. Therefore Gr₂ rather than Gr₃ is the more appropriate group for P₄. Indeed choosing Gr₃ for the adding of P₄ would break two relations between Gr₂ and P₄, whereas choosing Gr₂ would break only one relation, namely the relation between Gr₃ and P₄. Hence, P₄ is added to Gr₂ by the activity M₂, as illustrated by Fig. 4. As a consequence, Gr₂ has reached its maximum group size, so no further passenger may be added to the group Gr₂. For the remaining non-included, non-popular passenger P₃ only Gr₄ can be chosen now, since this group is the only group connected to P₃, which has not yet reached the maximum group size of four passengers per group. Hence, P₃ is added to Gr₄ by the activity M₁, as illustrated by Fig. 4.

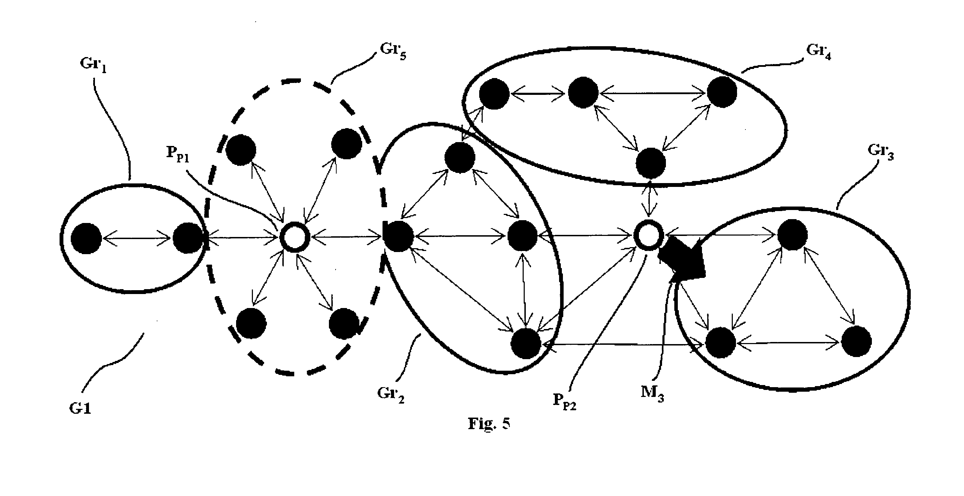

After all non-popular passengers that share relations to at least one non-popular passenger in G1 have been added to a group by the described embodiment of the claimed method, appropriate groups are chosen for the previously disregarded popular passengers. As shown in Fig. 5, there are two remaining popular passengers, P_{P1} and P_{P2}, of whom P_{P1} has six relations to other passengers in the graph and P_{P2} has five relations to other passengers in the graph. Since the passenger with highest number of relations among the remaining non-included passengers is prioritized, P_{P1} is chosen for a group assignment first. In this embodiment of the claimed method, P_{P1} is connected to four passengers who are only connected to P_{P1} and are not connected to any other passenger of G1. As a consequence of this special constellation, a new group Gr₅ is formed, consisting of P_{P1} and all passengers, who are only connected to this popular passenger. As P_{P2} is the last remaining passenger not yet included into a group, a group for P_{P2} is chosen accordingly. The popular passenger P_{P2} has relations to the three groups: Gr₂, Gr₃ and Gr₄. Since Gr₂ and Gr₄ have already reached the maximum number of passengers per group, the only feasible adding procedure M₃ is applied to P_{P2}, in accordance with the described embodiment of the claimed method, as illustrated by Fig. 5.

As a result of carrying out the activities mentioned above, groups of passengers have been formed out of the graph G1 in such a way that every passenger is included in a group. These groups can subsequently be used to assign a seat to each passenger in such a group.

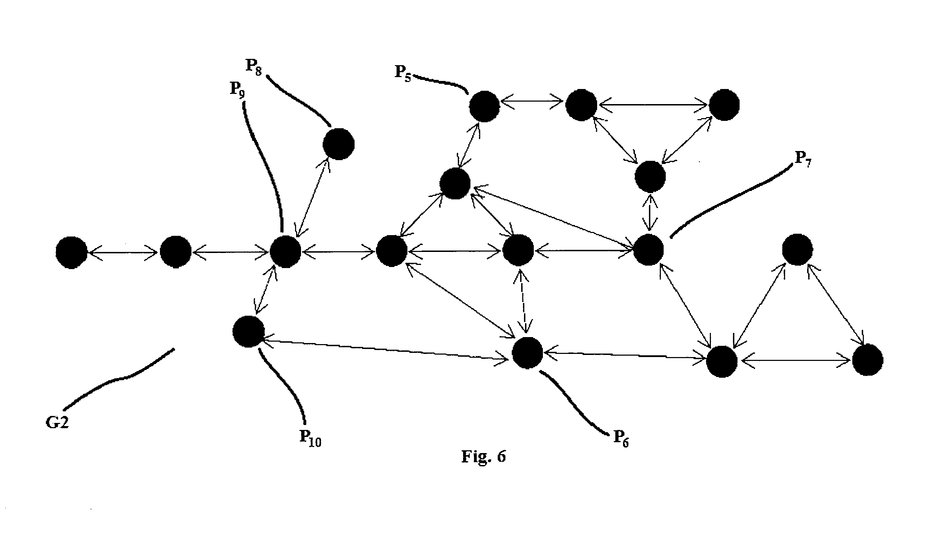

### Second exemplary seat assignment to passengers connected via social relations; Fig. 6 to Fig. 11:

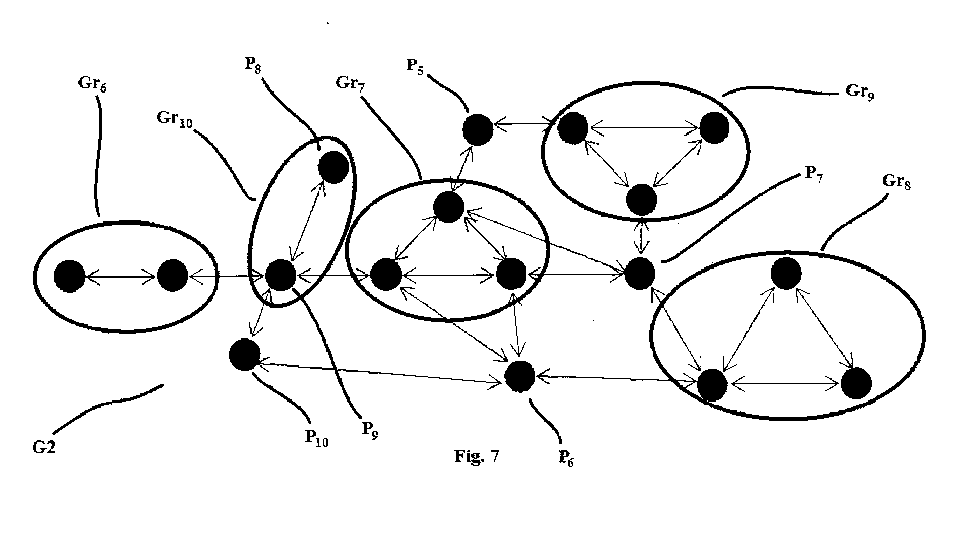

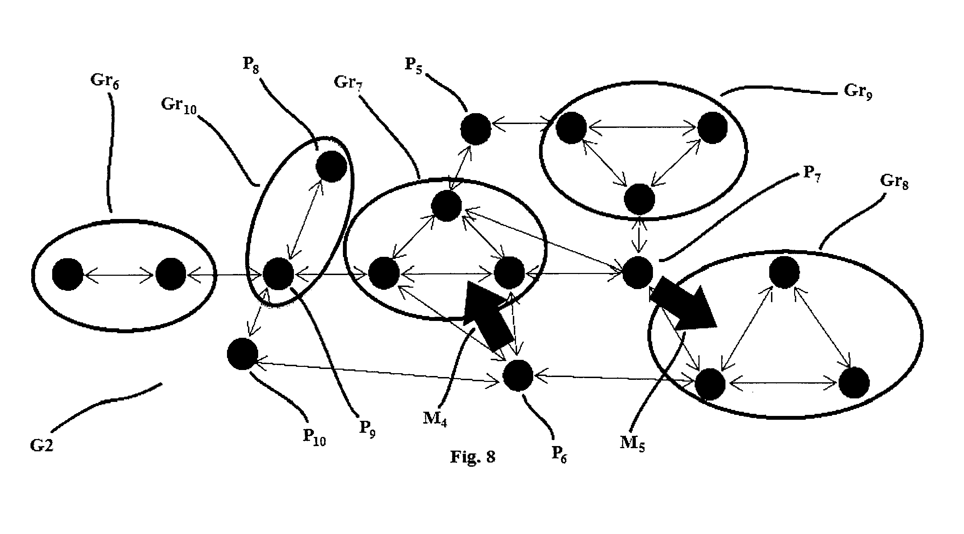

Fig. 6 illustrates a different manifestation of a graph G2, representing passengers and social relations between the passengers. The graph G2 consists of 17 vertices and 24 edges, corresponding to passengers and relations, respectively. In the embodiment of the method illustrated by Fig. 7 to Fig. 11, which is applied to G2, the maximum number defining a popular passenger is set to four, as in the exemplary embodiment discussed above. As no passenger of G2 has more relations to other passengers of that graph than this given maximum number, there are no popular passengers in that manifestation of the graph G2. In the described embodiment of the claimed method applied to G2, the maximum group size is set to four passengers per group. Carrying out the activities illustrated by Fig. 7, the graph is subdivided into five groups. These groups Gr₆, Gr₇, Gr₈, Gr₉ and Gr₁₀ are chosen during the subdivision in such a way that each of those groups contains only passengers, who have relations to the other passengers they are grouped with. In order to break as few relations as possible, the groups Gr₇, Gr₈ and Gr₉ containing three passengers and two groups Gr₆ and Gr₁₀ containing two passengers are chosen. As P₈, and P₁₀ do not have a relation to each other and are only connected via P₉, forming a group out of P₈, P₉ and P₁₀ is prohibited during this subdivision activity, since the formation of a group in this activity requires each passenger to be related to each other passenger in the group to be formed. Subsequent to the subdivision of the graph, the non-included passengers P₅, P₆, P₇ and P₁₀ are added to an appropriate group, as illustrated by Fig. 8 to Fig.11. Since P₆ and P₇ have an equal number of relations, which is the highest number of relations among the non-included passengers, the sequence in which P₆ and P₇ are processed can be chosen arbitrarily.

If vertex P₆ is chosen first, it is added to group Gr₇, as shown in Fig. 8, since Gr₇ is the group the vertex P₆ has the most connections to and therefore is the most appropriate group for P₆. Thus, vertex P₆ is added to group Gr₇ by the adding process M₄, as illustrated by Fig. 8. Even though Gr₇ would also be the most appropriate group for P₇, as a result of the addition of P₆ it has already reached the given maximum group size and is therefore not accessible for P₇. Since the two remaining adding options for vertex P₇, groups Gr₈ and Gr₉, are equivalent, another decision criterion is implemented. This decision criterion, the group-mark number mentioned above, is calculated separately for the groups Gr₈ and Gr₉ with respect to the non-included vertex P₇. It is calculated for group Gr₈ as follows: total number of connections group Gr₈ has to P₅ and P₇, which are the two non-included vertices connected to Gr₈, minus the number of connections Gr₈ has to popular passengers minus the number of connections group Gr₈ has to P₇. The group mark number for group Gr₉ is calculated accordingly. From these calculations the group-mark-numbers 2-0-1 = 1 for group Gr₉ and 1-0-1 = 0 for group Gr₈ result with respect to vertex P₇. As the group-mark number for Gr₈ is smaller than for Gr₉, group Gr₈ is the more appropriate group for vertex P₇. Thus, vertex P₇ is added to group Gr₈ by the adding process M₅, as illustrated by Fig. 8.

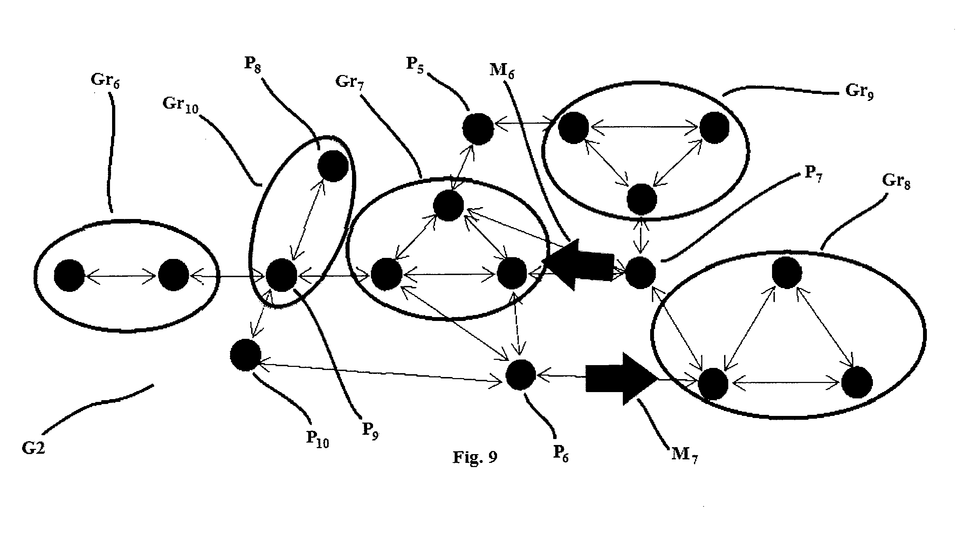

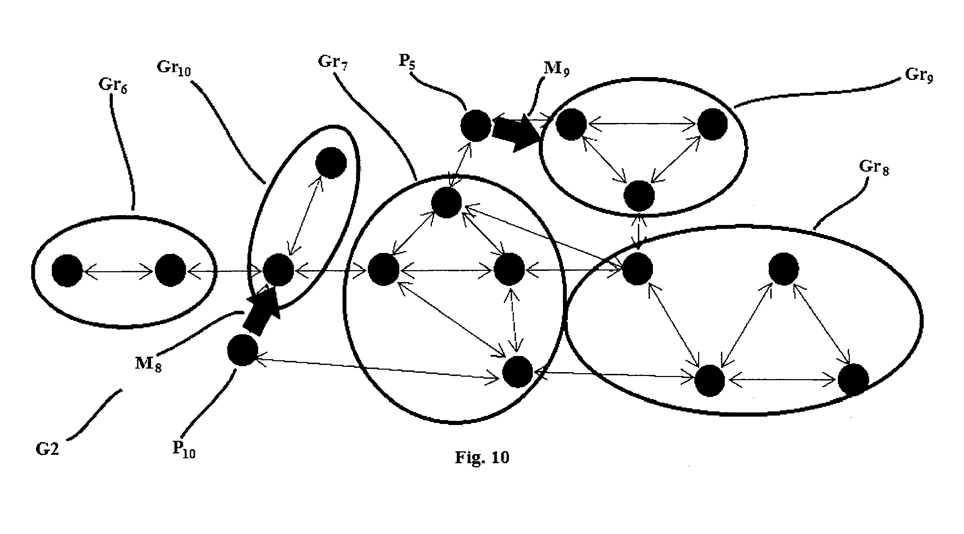

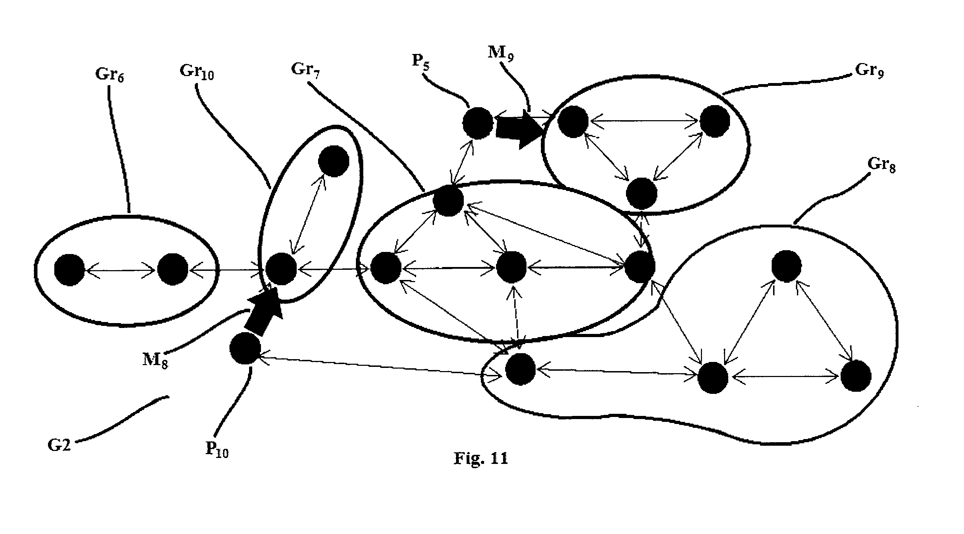

Alternatively, if vertex P₇ is chosen first, it is added to group Gr₇, as shown in Fig. 9, since Gr₇ is the group that vertex P₇ has the most connections to and therefore is the most appropriate group for P₇. Thus, vertex P₇ is added to group Gr₇ by adding process M₆, as illustrated by Fig. 9. Even though Gr₇ would also be the most appropriate group for P₆, as a result of the addition of P₇ it has already reached the given maximum group size and is therefore not accessible for P₆. Since only one adding option for vertex P₆ remains, it is added to group Gr₈ by adding process M₇. Fig. 10 and Fig. 11 illustrate two different outcomes depending on the sequence of the adding processes of P₆ and P₇. Fig. 10 corresponds to P₆ being chosen first for the adding process and Fig. 11 corresponds to P₇ being chosen first for the adding process.

Subsequent to the adding processes applied to vertices P₆ and P₇ the two non-included vertices P₅ and P₁₀ are now added to appropriate groups, in an arbitrarily chosen sequence as their total number of connections to other vertices in the graph is identical. Vertex P₅ is connected to groups Gr₇ and Gr₉, but Gr₇ has already reached the given maximum group size. So the only remaining adding option for the vertex P₅ is the group Gr₉. As illustrated by Fig. 10 and Fig. 11, P₅ is added into Gr₉ by adding process M₉. Since all other vertices have been added into groups, vertex P₁₀ is the only remaining non-included vertex. It is connected to two groups, Gr₁₀ and Gr₈. As Gr₈ has already reached the given maximum group size, vertex P₁₀ is added to group Gr₁₀ by adding process M₈. Choosing the sequence of the adding processes of P₅ and P₁₀ differently leads to the same outcome. The adding processes for P₅ and P₁₀ are interchangeable as P₅ and P₁₀ are not connected to the same groups.

As a result of carrying out the activities mentioned above, groups of passengers have been formed out of the graph G2 in such a way that every passenger is included in a group. These groups can subsequently be used to assign a seat to each passenger in such a group.

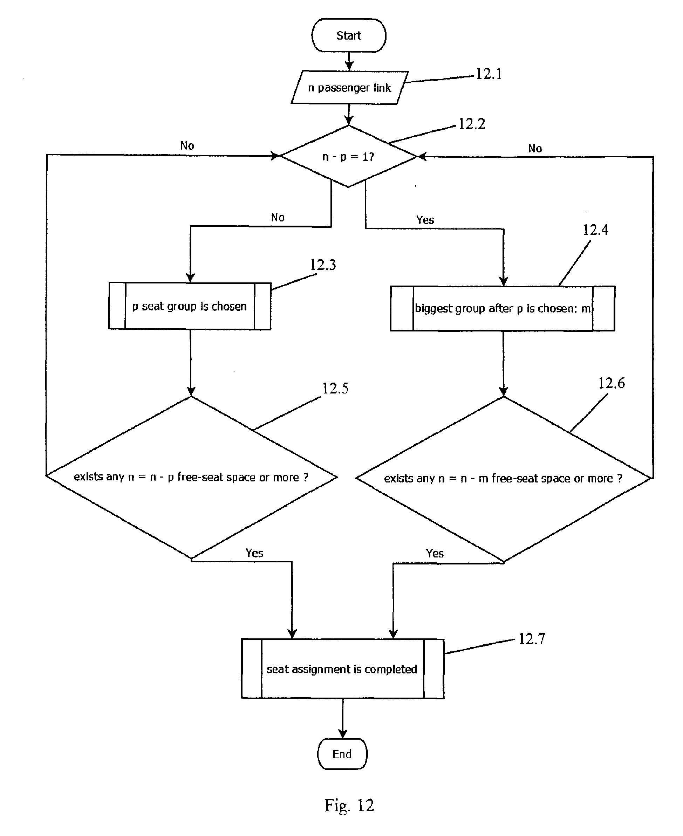

### Exemplary split of a group of passengers during a seat assignment: Fig. 12 to Fig. 14

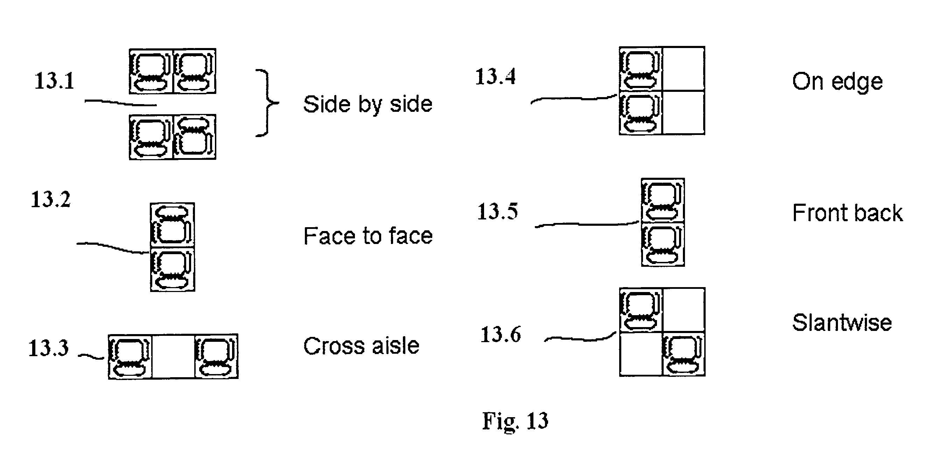

In some embodiments, the number of passengers in a group 12.1 may exceed the number of unoccupied seats in the largest available link-seat-configuration. As mentioned before, a link-seat-configuration might be made up of any combination of unoccupied side by side 13.1, face to face 13.2, cross aisle 13.3, on edge 13.4, front to back 13.5 or slantwise 13.6 seat conjunctions, as illustrated by Fig. 13. In such a case the group 12.1 is split in order to prevent a passenger of the group 12.1 from being seated alone, i.e. separated from the rest of his group 12.1. This split of the group 12.1 divides that group 12.1 into not necessarily equal subgroups for the seat assignment.

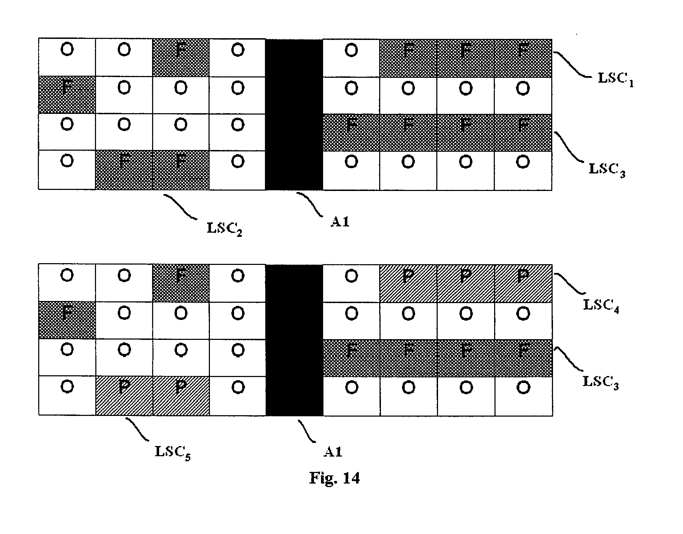

In some embodiments the number of vertices in a group 12.1 might exceed the number of unoccupied seats in the largest link-seat-configuration by exactly one. In an exemplary embodiment, a group of five passengers 12.1 could have been formed and three unoccupied link-seat-configurations are available: one with four free side-by-side seats LSC₃, another one with three free side-by-side seats LSC₁ and still another one with two free side-by-side seats LSC₂, as illustrated in Fig. 14. This figure shows the exemplary arrangement of partially occupied seating space of a vehicle, separated by an aisle A1, illustrating this arrangement before and after seats are assigned to a group of five passengers. The illustrated boxes represent seats of a vehicle, each box corresponding to a seat. The seats are designated as free, passenger of group and already occupied, by the letters F, P, and O, respectively.

Since none of the link-seat-configurations illustrated by Fig. 14 provides enough free seating space to assign seats to the entire five-passenger-group 12.1 a split has to be performed. In such a case the method of assigning seats defined by the activities indicated in the method claims will carry out the successive activities 12.2, 12.4, and 12.6 sketched in the flow chart illustrated by Fig. 12. During the activity 12.2 a request is made, whether the condition that the number of passengers in the group to be seated 12.1 exceeds the number of seats in the largest available link-seat-configuration by exactly one is fulfilled.

Since the number of passengers in the group 12.1 is five and the largest available link-seat-configuration LSC₃ contains only four seats, the condition 12.2 is indeed fulfilled. Therefore the next smaller available link-seat-configuration LSC₁ is chosen, which in this case contains three unoccupied seats, as illustrated by Fig. 14. Now two passengers of the group 12.1 remain without an assigned seat. Thus a remainder group out of these two passengers is formed, as a result of the activity 12.4. As illustrated by Fig. 14, a link-seat-configuration containing exactly two seats LSC₂ is available, thus the condition 12.6 is fulfilled for the remainder group and seats of the link-seat-configuration LSC₂ are assigned to the passengers of the remainder group. Thus the previously unoccupied seats in the link-seat-configurations LSC₁ and LSC₂ turn into link-seat-configurations LSC₄ and LSC₅, respectively and are now unavailable for further seat assignment. The method of performing a split is thereafter concluded by activity 12.7.

### Exemplary split of a group of passengers during a seat assignment; Figs. 12, 13 and 15

In some embodiments the number of vertices in a group 12.1 might exceed the number of unoccupied seats in the largest link-seat-configuration by at least two. In an exemplary embodiment, a group of seven passengers 12.1 could have been formed and three unoccupied link-seat-configurations are available: one with three free side-by-side seats LSC₆, another one with two free side-by-side seats LSC₇ and still another one with two free side-by-side seats LSC₈, as illustrated by Fig. 15. This figure shows the exemplary arrangement of partially occupied seating space of a vehicle, separated by an aisle A2, illustrating this arrangement before and after seats are assigned to a group of seven passengers. The illustrated boxes represent seats of a vehicle, each box corresponding to a seat. The seats are designated as free, passenger of group and already occupied, by the letters F, P, and O, respectively. Since none of the link-seat-configurations illustrated by Fig. 15 provides enough free seating space to assign seats to the entire seven-passenger-group 12.1 a split of that group 12.1 has to be performed.

In such a case the method of assigning seats defined by the activities indicated in the method claims will apply the successive activities 12.2, 12.4 and 12.6, sketched in the flow chart illustrated by Fig. 12, to the seven-passenger-group 12.1. During activity 12.2 a request is made, whether the condition that the number of passengers in the group to be seated 12.1 exceeds the number of seats in the largest available link-seat-configuration by exactly one is fulfilled. Since the number of passengers in the group 12.1 is seven and the largest available link-seat-configuration LSC₆ contains only three seats, the number of passengers in the group 12.1 exceeds the number of seats in LSC₆ by four and, therefore, the condition 12.2 is not fulfilled.

Subsequently the largest available link-seat-configuration LSC₆ is chosen, which in this case contains three unoccupied seats, as illustrated by Fig. 15. Now four passengers of the group 12.1 remain without an assigned seat. Thus a remainder group of these four passengers is formed, as a result of the activity 12.3. As illustrated by Fig. 15, there are two different link-seat-configurations LSC₇ and LSC₈, available, each with two seats. Thus the number of passengers in the remainder group exceeds the number of seats in the largest available link-seat-configuration again by more than one; in this case by two. Subsequently, the next smaller available link-seat-configuration is chosen 12.3. As LSC₇ and LSC₈ are both the next smaller available link-seat-configuration, one of them is arbitrarily chosen for the seat assignment. Assuming LSC₇ has been chosen, two passengers of the remainder group are assigned a seat of LSC₇. The residual-remainder group formed as a result of this iteration of activity 12.3 does not fulfill condition 12.2, as the difference between the number of passengers in the residual-remainder group and the number of seats in the largest available link seat configuration LSC₈ is zero. As illustrated by Fig. 15, the condition 12.6 is fulfilled, since the remaining link-seat-configuration LSC₈ contains exactly the two seats necessary to seat the residual-remainder group of two passengers. Thus the previously unoccupied seats in the link-seat-configurations LSC₆, LSC₇ and LSC₈ turn into link-seat-configurations LSC₉, LSC₁₀ and LSC11, respectively and are now unavailable for further seat assignment. The method of performing a split is thereafter concluded by activity 12.7.

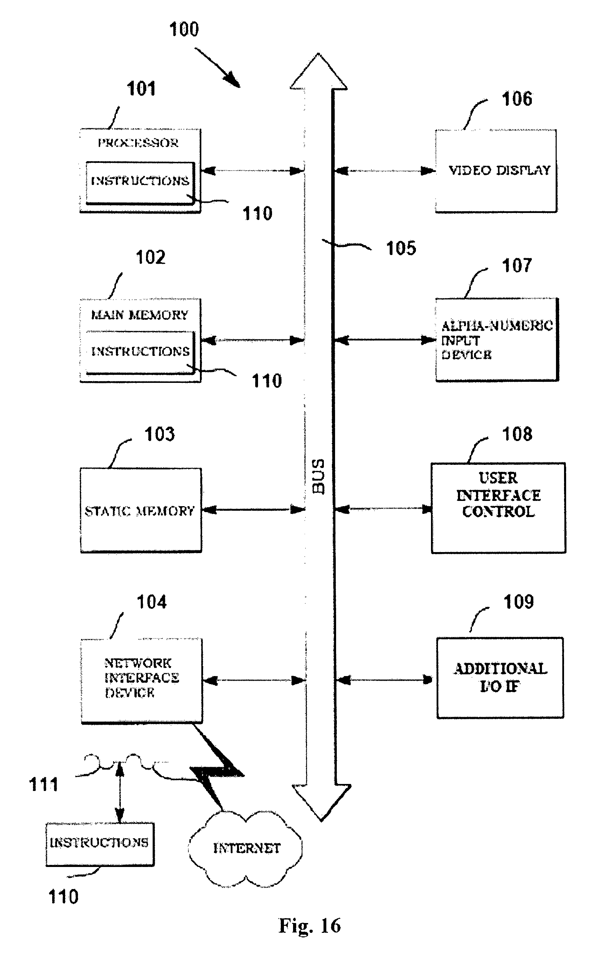

### Computer system; Fig. 16

Fig. 16 is a diagrammatic representation of an exemplary computer system 100 arranged to execute a set of instructions, to cause it to perform any of the methodologies used for a seat assignment and/or an optional split of a group formed during this seat assignment, as described herein. The computer system 100 includes a processor 101, a main memory 102 and a network interface 104. It further includes a static memory 103, e.g. non-removable flash and/or solid state drive and/or a removable Micro or Mini SD card, which permanently stores the software enabling the computer system 100 to execute its functions. Furthermore, it may include a display 106, a user interface control module 108 and/or an alpha-numeric and cursor input device 107. Optionally, additional I/O interfaces 109, such as card reader and USB interfaces may be present. In some embodiments the software programmed to carry out the method of assigning seats discussed herein is stored on the static memory 103; in other embodiments external databases, e.g. databases containing social network relation data, are used. The method of assigning seats discussed herein is performed via the network interface device 104.

An executable set of instructions (i.e. software) 110 embodying any one, or all, of the methodologies described above, resides completely, or at least partially, permanently in the non-volatile memory 103. When being executed, process data resides in the main memory 102 and/or the processor 101. The software 110 may further be transmitted or received as a propagated signal 111 through the network interface device 104 from/to a software server within a local area network or the Internet.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A method carried out by means of a computer of assigning seats to passengers of a passenger-transport vehicle, wherein given social relations between passengers are used in the seat assignment, the passengers having a social network relation with at least one of the other passengers and the social network relations of said passengers corresponding to at least one graph with vertices and edges, wherein the passengers correspond to the vertices of the graph and the social-network relations correspond to the edges of the graph, the method comprising:
subdividing the graph into groups of vertices, wherein the subdividing encompasses vertices within each group of vertices that are connected to each other vertex in said group of vertices and have fewer than a given maximum number of connections to other vertices in the graph, wherein in the subdividing said groups of vertices are selected by minimizing the cuts of edges between said vertices in the graph;
in response to at least one vertex not being included in any group of vertices as a result of the subdividing, adding said at least one non-included vertex to a group connected to said at least one non-included vertex via at least one edge, thereby increasing the size of the group obtained from the subdividing.

2. The method of claim 1, wherein passengers whose seats were already assigned due to a reservation link which had resulted from a prior booking being disregarded in the graph.

3. The method of claim 1 or 2, wherein the graph is subdivided into groups, each group comprising a minimum number of two and a maximum number of three vertices, wherein each vertex in said group of vertices is connected to each other vertex in said group of vertices.

4. The method of any one of claims 1 to 3, wherein in response to at least one vertex not being included in any group of vertices by the subdividing, adding said at least one non-included vertex to the group of vertices which comprises the fewest number of vertices.

5. The method of any one of claims 1 to 4, wherein in response to at least one vertex not being included in any group of vertices by the subdividing, adding said at least one non-included vertex to the group of vertices to which said vertex has the highest number of connections via edges to vertices in said group.

6. The method of any one of claims 1 to 5, wherein in response to at least one vertex not being included in any group of vertices by the subdividing, adding said at least one non-included vertex to a group of vertices, respecting a given maximum number of vertices per group.

7. The method of any one of claims 1 to 6, wherein in response to at least two vertices not being included in any group of vertices by the subdividing and at least one of said non-included vertices has more than said given maximum number of connections to other vertices in the graph, creating a group of vertices comprising said at least two non-included vertices.

8. The method of any one of claims 1 to 7, wherein in response to the number of vertices in a group of vertices exceeding the number of unoccupied seats in a largest link-seat-configuration, wherein a link-seat-configuration comprises any combination of unoccupied side by side, face to face, cross aisle, on edge, front to back, or slantwise seat conjunctions, said group of vertices is split.

9. The method of claim 8, wherein in response to the number of vertices in a group of vertices exceeding the number of unoccupied seats in the largest link-seat-configuration by at least two, assigning a seat of the largest link-seat-configuration to each vertex in said group of vertices, each vertex in the group of vertices corresponding to a passenger, until each seat of the largest link-seat-configuration has been assigned; the vertices that have not been assigned a seat of the largest link-seat-configuration constituting a remainder-group of vertices.

10. The method of claim 8, wherein in response to the number of vertices in a group of vertices exceeding the number of unoccupied seats in the largest link-seat-configuration by at least two, assigning a seat of the largest link-seat-configuration to each vertex in said group of vertices, each vertex in the group of vertices corresponding to a passenger, until each seat of the largest link-seat-configuration has been assigned; the vertices that have not been assigned a seat of the largest link-seat-configuration constituting a remainder-group of vertices; assigning seats of an unoccupied link-seat-configuration that comprises a number of seats equal to or higher than the number of vertices in said remainder-group of vertices to the vertices of said remainder-group, each vertex of said remainder-group corresponding to a passenger.

11. The method of claim 9, wherein in response to the number of vertices in a remainder-group of vertices exceeding the number of unoccupied seats in the largest link-seat-configuration by at least two, assigning a seat of the largest link-seat-configuration to each vertex, in said group of vertices, each vertex in the group of vertices corresponding to a passenger, until each seat of the largest link-seat-configuration has been assigned; the vertices that have not been assigned a seat of the largest link-seat-configuration constituting a residual-remainder-group of vertices; assigning seats of an unoccupied link-seat-configuration that comprises a number of seats equal to or higher than the number of vertices in said residual-remainder-group of vertices to the vertices of said residual-remainder-group, each vertex of said remainder-group corresponding to a passenger.

12. The method of claims 8 or 9, wherein in response to the number of vertices in a group of vertices, a remainder-group of vertices or a residual-remainder-group of vertices exceeding the number of unoccupied seats in the largest link-seat-configuration by exactly one, assigning a seat of the next smaller unoccupied link-seat-configuration to each vertex in said group of vertices, each vertex in the group of vertices corresponding to a passenger, until each seat of the next smaller unoccupied link-seat-configuration has been assigned; the vertices that have not been assigned a seat of the next-smaller unoccupied link-seat-configuration in said group of vertices constituting a rest-group of vertices; assigning seats of an unoccupied link-seat-configuration that comprises a number of seats equal to or higher than the number of vertices in said rest-group of vertices to the vertices of said rest-group, each vertex of said rest-group corresponding to a passenger.

13. A computer system being programmed to assign seats to passengers of a passenger-transport vehicle, wherein given social network relations between passengers are used in the seat assignment, the passengers having a social network relation with at least one of the other passengers and the social network relations of said passengers corresponding to at least one graph with vertices and edges, wherein the passengers correspond to the vertices of the graph and the social-network relations correspond to the edges of the graph, the computer system being programmed to:
subdivide the graph into groups of vertices, wherein the subdividing encompasses vertices in each group of vertices that are connected to each other vertex in said group of vertices and are having fewer than a given maximum number of connections to other vertices in the graph, wherein in the subdividing said groups of vertices are selected by minimizing the cuts of edges between said vertices in the graph;
in response to at least one vertex not being included in any group of vertices as a result of the subdividing, add said at least one non-included vertex to a group connected to said at least one non-included vertex via at least one edge, thereby increasing the size of the group obtained from the subdividing.

14. The computer system of claim 13, further programmed to carry out the activities of any one of claims 2 to 12.

15. A computer program for assigning seats of a vehicle to passengers of a passenger-transport vehicle, wherein given social network relations between passengers are used in the seat assignment, the passengers having a social network relation with at least one of the other passengers and the social network relations of said passengers corresponding to at least one graph with vertices and edges, wherein the passengers correspond to the vertices of the graph and the social-network relations correspond to the edges of the graph, the computer program causing a computer to:
subdivide the graph into groups of vertices, wherein the subdividing encompasses vertices in each group of vertices that are connected to each other vertex in said group of vertices and are having fewer than a given maximum number of connections to other vertices in the graph, wherein in the subdividing said groups of vertices are selected by minimizing the cuts of edges between said vertices in the graph;
in response to at least one vertex not being included in any group of vertices as a result of the subdividing, add said at least one non-included vertex to a group connected to said at least one non-included vertex via at least one edge, thereby increasing the size of the group as obtained from the subdividing.

16. The computer program of claim 15, further causing a computer to carry out the activities of any one of claims 2 to 12.
